# EUROPÄISCHE PATENTSCHRIFT

(11) **EP 3 750 386 B1**
(45) Veröffentlichungstag und Bekanntmachung des Hinweises auf die Patenterteilung: **02.11.2022**
(21) Anmeldenummer: 20170828.6
(22) Anmeldetag: 22.04.2020
(51) Int. Cl.: A01B 33/02, A01B 33/06, A01B 33/08

(54) **VERFAHREN ZUR LANDWIRTSCHAFTLICHEN BODENBEARBEITUNG, WERKZEUGSYSTEM, GENERATORMODUL SOWIE DEREN VERWENDUNG**
METHOD FOR AGRICULTURAL SOIL WORKING, TOOL SYSTEM, GENERATOR MODULE AND ITS USE
PROCÉDÉ DE TRAITEMENT DU SOL AGRICOLE, SYSTÈME D'OUTILS, MODULE GÉNÉRATEUR AINSI QUE LEUR UTILISATION

(30) Priorität: 16.05.2019 DE 102019112958
(43) Veröffentlichungstag der Anmeldung: 16.12.2020
(73) Patentinhaber: Kronos GmbH, 01217 Dresden (DE)
(72) Erfinder: BÖGEL, Tim, 01099 Dresden (DE); MARSEL, Matthias, 01705 Freital (DE); HERLITZIUS, Thomas, 01640 Coswig (DE)
(74) Vertreter: Viering, Jentschura & Partner mbB Patent- und Rechtsanwälte

(56) Entgegenhaltungen:
- EP-A1- 2 371 190
- EP-A1- 2 936 957
- DE-A1- 10 010 819
- DE-A1-102017 122 645
- US-A1- 2018 352 718

## Beschreibung

Verschiedene Ausführungsbeispiele betreffen ein Verfahren zur landwirtschaftlichen Bodenbearbeitung, ein Werkzeugsystem, ein Generatormodul sowie die Verwendung des Generatormoduls und des Werkzeugsystems in Verbindung mit einem Trägerfahrzeug und Verfahren davon.

Im Allgemeinen kann ein landwirtschaftliches Bodenbearbeitungsgerät, wie beispielsweise eine Kreiselegge, eine Fräse, etc., den Boden mittels eines rotierenden Werkzeugs bearbeiten, wobei die mechanische Drehzahl konstant ist und während des Verfahrens nicht geregelt wird. Beispielsweise kann ein landwirtschaftliches Bodenbearbeitungsgeräte an ein spezielles damit durchzuführendes Bodenbearbeitungsverfahren angepasst sein. Allerdings können herkömmliche landwirtschaftliche Bodenbearbeitungsgeräte nicht während des Bodenbearbeitungsverfahrens auf effiziente Weise auf äußere Einflüsse (wie beispielsweise der Bodenzustand, der Bewuchs, die Feuchte, die Bearbeitungsgeschwindigkeit, die Bearbeitungstiefe, etc.) oder Störungen reagieren. Daher können herkömmliche Bodenbearbeitungsgeräte im Wandeln der landwirtschaftlichen Verfahren (z.B. Verzicht auf Pflug, Verzicht auf chemischen Einsatz, Bewuchs, Klimawandel) an ihre Einsatzgrenzen gelangen oder verschiedene Bodenbearbeitungsverfahren nicht mit einer hohen Effizienz durchführen.

US 2018/352718 A1 beschreibt ein Bodenbearbeitungsgerät mit Scheibenklingen, Rotations-Stabilisierungs-Rädern und Anhäufungssensoren, wobei die Anhäufungssensoren an einem Rahmen befestigt sind und den Scheibenklingen bzw. den Rotations-Stabilisierungs-Rädern derart zugewandt sind, dass die Anhäufungssensoren eine Anhäufung von Material an den Scheibenklingen bzw. den Rotations-Stabilisierungs-Rädern detektieren können. EP 2 371 190 A1 beschreibt ein Bodenbearbeitungsgerät mit Werkzeugkreiseln, die separat über Elektromotoren angetrieben werden. DE 10 2017 122 645 A1 beschreibt ein landwirtschaftliches Anbaugerät, wobei mittels Sensoren eine Beschaffenheit eines Feldbestands vor dem Anbaugerät erfasst wird. EP 2 936 957 A1 beschreibt ein Erntegerät mit mehreren Kameras. DE 100 10 819 A1 beschreibt einen Traktor mit einer Steckdose.

Im Folgenden werden ein Bodenbearbeitungsgerät und ein Verfahren zur Bodenbearbeitung beschrieben, wobei während der Bodenbearbeitung Einfluss auf das Arbeitsergebnis genommen wird oder werden kann. Das hierin beschriebene Bodenbearbeitungsgerät ist beispielsweise derart ausgestaltet, dass es während der Bodenbearbeitung einen geringen spezifischen Energiebedarf hat. Ferner kann das hierin beschriebene Bodenbearbeitungsgerät derart ausgestaltet sein, dass bei der Bodenbearbeitung eine vergleichsweise hohe Flächenleistung erzielt werden kann, z.B. mehr als 1 ha /h·m_{Arbeitsbreite}). Ferner kann das hierin beschriebene Bodenbearbeitungsgerät derart ausgestaltet sein, dass eine vergleichsweise hohe Arbeitsgeschwindigkeit ermöglicht ist, z.B. mehr als 6 km/h oder mehr als 10 km/h.

Herkömmliche passiv gezogene Bodenbearbeitungsgeräte, wie z.B. ein Pflug, ein Grubber, eine Scheibenegge, etc., können vergleichsweise hohe Flächenleistungen ermöglichen, da derartige Bodenbearbeitungsgeräte für hohe Arbeitsgeschwindigkeiten ausgelegt sein können, allerdings erfordert dies auch hohe Zugkräfte seitens der Zugmaschine. In der Folge sind die erforderlichen leistungsstarken Zugmaschinen mit entsprechenden Zusatzgewichten ausgestattet, um beispielsweise die notwendige Triebkraft zu erzeugen. Dadurch tragen derartige Gespanne jedoch auch maßgeblich zu einer in der Regel schädlichen Bodenverdichtung bei. Das spezifische Maschinengewicht derartiger Gespanne zur Bodenbearbeitung kann beispielsweise deutlich höher sein als bei aktiv angetriebenen Bodenbearbeitungsgeräten.

Hierin werden ein Bodenbearbeitungsgerät und ein Verfahren zur Bodenbearbeitung beschrieben, wobei das Bodenbearbeitungsgerät ein oder mehrere aktive elektrisch angetriebene Werkzeuge aufweist zur Bodenbearbeitung sowie einen Zusatzantrieb in Form eines elektrisch angetriebenen Nachlaufwerkzeugs zur Zugentlastung einer Zugmaschine. Dabei können die elektrischen Antriebe, welche Einfluss auf das Bodenbearbeitungsergebnis haben, mittels einer Regelung geregelt werden zum Gewährleisten eines vordefinierten Bodenbearbeitungsergebnisses trotz äußeren Einflüsse bzw. Störungen. Ein vordefiniertes Bodenbearbeitungsergebnis kann hierin auch als Soll-Bodenbearbeitungsergebnis bezeichnet sein.

Ausführungsbeispiele sind in den Figuren dargestellt und werden im Folgenden näher erläutert.

Es zeigen
Figur 1 ein Werkzeugsystem in einer schematischen Ansicht, gemäß verschiedenen Ausführungsformen;
Figur 2 ein schematisches Ablaufdiagramm eines Verfahrens zur landwirtschaftlichen Bodenbearbeitung mittels einer Bodenbearbeitungseinheit, gemäß verschiedenen Ausführungsformen;
Figur 3 ein schematisches Ablaufdiagramm eines Verfahrens zur landwirtschaftlichen Bodenbearbeitung mittels einer Bodenbearbeitungseinheit, gemäß verschiedenen Ausführungsformen;
Figur 4 ein Sensorsystem in einer schematischen Darstellung, gemäß verschiedenen Ausführungsformen;
Figur 5 bis Figur 7 verschiedene Konfigurationen einer Bodenbearbeitungseinheit in jeweils einer schematischen Darstellung, gemäß verschiedenen Ausführungsformen;
Figur 8A ein Generatormodul in einer schematischen Darstellung, gemäß verschiedenen Ausführungsformen;
Figur 8B ein Trägerfahrzeug mit einem Generatormodul und ein an das Trägerfahrzeug gekuppeltes Werkzeugsystem in einer schematischen Darstellung, gemäß verschiedenen Ausführungsformen;
Figur 8C ein Trägerfahrzeug und ein an das Trägerfahrzeug gekuppeltes Werkzeugsystem in einer schematischen Darstellung, gemäß verschiedenen Ausführungsformen;
Figur 9A ein Gespann aus einem Trägerfahrzeug und einem Werkzeugsystem, wobei das Werkzeugsystem mittels eines Generatormoduls versorgt wird, in einer schematischen Darstellung, gemäß verschiedenen Ausführungsformen; und
Figur 9B beispielhafte Leistungsverteilungen und Kommunikationswege eines Gespanns aus einem Trägerfahrzeug und einem Werkzeugsystem, wobei das Werkzeugsystem mittels eines Generatormoduls versorgt wird, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

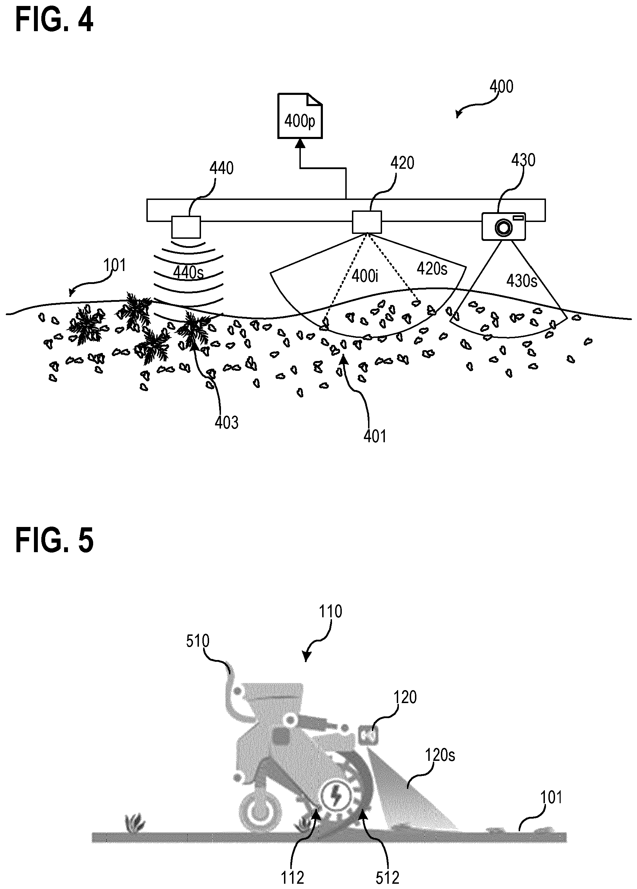

Verschiedene Ausführungsformen beziehen sich auf ein Werkzeugsystem zur landwirtschaftlichen Bodenbearbeitung, wobei das Werkzeugsystem derart ausgestaltet ist, dass dieses einen geringen Zugkraftbedarf aufweist sowie ein geringes Maschinengewicht. Das Werkzeugsystem ist beispielsweise modular aufgebaut und kann auf effiziente Weise an ein durchzuführendes Bodenbearbeitungsverfahren angepasst werden, die beispielsweise die Figuren 5 bis 7.

Auf Grund des Wirkprinzips der hierin beschriebenen Bodenbearbeitungseinheit des Werkzeugsystems kann dieses in verschiedenen landwirtschaftlichen Bodenbearbeitungsverfahren (z.B. Stoppelsturz, Flüssigdüngereinarbeitung, mechanische Unkrautbekämpfung, Saatbettbereitung, etc.) eingesetzt werden. Dabei kann die jeweilige Zugmaschine bzw. ein Trägerfahrzeug von schwerer Zugarbeit durch einen zugkraftreduzierenden Arbeitsprozess sowie optional durch triebkrafterzeugende Nachlaufelemente entlastet werden. Das Arbeitsergebnis des Werkzeugsystems in dem bearbeiteten Bodenbereich kann mittels mindestens eines Sensors erfasst werden und entsprechend mittels eines Computersystems bewertet werden. Basierend auf Informationen bezüglich des erzeugten Arbeitsergebnisses kann beispielsweise die Drehzahl eines elektromechanischen Antriebs angepasst werden. Dadurch können beispielsweise das Arbeitsergebnis sowie der Leistungsbedarf des Werkzeugsystems bzw. der Bodenbearbeitungseinheit des Werkzeugsystems aktiv gesteuert bzw. geregelt werden.

Gemäß verschiedenen Ausführungsformen kann die Bodenbearbeitungseinheit einen elektromechanischen Antriebsstrang aufweisen in Kombination mit mindestens einem Sensor zum Ermitteln des Arbeitsergebnisses (z.B. der Bodenrauheit) sowie einer gesteuerten Triebkrafterzeugung am Nachläufer. Die Sensorinformationen können beispielsweise genutzt werden, um die Antriebsdrehzahl eines Zinkenrotors derart zu verstellen, dass ein gleichbleibendes (z.B. vordefiniertes) Arbeitsergebnis erzielt werden kann. Zur Zugkraftentlastung des Trägerfahrzeuges kann das Nachlaufwerkzeug ebenfalls elektrisch zur Triebkrafterzeugung angetrieben und entsprechend gesteuert werden. Gemäß verschiedenen Ausführungsformen kann die elektrische Leistung mittels eines flexibel montierbaren Generatormoduls bereitgestellt sein oder werden. Das Generatormodul kann zwischen dem Trägerfahrzeug und dem Werkzeugsystem montiert sein oder werden. Gemäß verschiedenen Ausführungsformen kann das Generatormodul eingerichtet sein zum Ankuppeln oder Anbau an einem Trägerfahrzeug sowie zum Ankuppeln oder Anbau des Bodenbearbeitungsgerätes mittels entsprechenden genormter mechanischen Schnittstellen. Ferner kann das Generatormodul einen Teil der mechanischen Zapfwellenleistung des Trägerfahrzeugs mittels eines Generators in elektrische Leistung umwandeln.

Gemäß verschiedenen Ausführungsformen kann das Generatormodul derart eingerichtet sein, dass ein Teil der mechanischen Leistung von einem Getriebe zu dem Bodenbearbeitungsgerät durchgeleitet werden kann. Das Generatormodul kann bei Bedarf den angekuppelten Arbeitsgeräten zwei Energiearten zur Verfügung stellen und kann die dafür notwendige Leistungs- und Steuerungselektronik aufweisen. Prozessinformationen (wie beispielsweise Drehzahl des Zinkenrotors, Drehmoment des Zinkenrotors, Drehzahl des Nachlaufwerkzeugs, und/oder Drehmoment des Nachlaufwerkzeugs) können mit den Sensorinformationen des Arbeitsergebnisses ausgewertet und/oder in einer automatischen Maschinenregelung verarbeitet werden. Ferner kann das Arbeitsergebnis ortspezifisch referenziert (per GPS) und zur Dokumentation und/oder Auswertung aufgezeichnet werden.

Die hierin beschriebene landwirtschaftliche Bodenbearbeitungsmaschine kann flexibel und energieeffizient in verschiedenen landwirtschaftlichen Verfahren eingesetzt werden. Es kann, gemäß verschiedenen Ausführungsformen, eine zumindest teilweise Autonomisierung des Arbeitsprozesses erfolgen für verbesserte Arbeitsergebnisse auch unter wechselnden, standortspezifischen Einsatzbedingungen. Es kann, gemäß verschiedenen Ausführungsformen, eine Erfassung (z.B. eine Echtzeiterfassung) und eine Dokumentation der teilschlagspezifischen Prozessparameter erfolgen. Gemäß verschiedenen Ausführungsformen kann das Werkzeugsystem derart bereitgestellt sein oder werden, dass eine Kompatibilität zu derzeitigen Bestandsfahrzeugen gewährleistet sein kann (z.B. eine Kompatibilität bezüglicher der Leistungsversorgung, der Steuerung per drahtloser oder drahtgebundener Kommunikation, bzw. des jeweils verwendeten Daten-BUS Standards). Beispielsweise kann eine Kommunikation per ISO-BUS Standard implementiert sein oder werden.

Verschiedene Ausführungsformen beziehen sich auf ein Verfahren und eine entsprechende Vorrichtung deren Funktionsweise auf einer Werkzeugkombination aus passiv gezogenen Lockerungselementen und einem aktiv (z.B. elektrisch) angetriebenen rotierenden Zinkenrotor basieren kann. Mittels Einstellens der Drehzahl des Zinkenrotors kann beispielsweise das erzielte Arbeitsergebnis angepasst werden. Zum Ermitteln des erzielten Arbeitsergebnisses kann beispielsweise mindestens ein Sensor verbaut sein. Mittels des mindestens einen Sensors kann beispielsweise die Bodenrauheit gemessen werden und diese Messdaten können der Steuerung/Regelung des Zinkenrotors zur Verfügung gestellt werden. Die Steuerung/Regelung kann in Abhängigkeit des geforderten Verfahrensziels des Benutzers (Bedieners) das Arbeitsergebnis des Arbeitsgerätes auch unter wechselnden Bedingungen teilschlagspezifisch steuern/regeln. Zur Drehzahlverstellung kann beispielsweise ein elektromechanischer Antriebstrang verwendet werden, welcher optional von einer modularen Generatoreinheit oder einem Trägerfahrzeug mit elektrischer Leistung versorgt wird. Diese Generatoreinheit kann zwischen das Trägerfahrzeug und das Arbeitsgerät gekoppelt sein oder werden. Das mindestens eine Nachlaufwerkzeug des Arbeitsgerätes kann optional elektrisch angetrieben sein oder werden und beispielsweise durch die Auflast (d.h. das Maschinengewicht) eine Triebkraft erzeugen. Die Steuerung/Regelung des Arbeitsgerätes sowie des Generatormoduls kann beispielsweise per ISO-BUS Standard über das trägerfahrzeugseitig verbaute Terminal erfolgen und/oder beispielsweise drahtlos mittels eines mobilen Endgeräts (z.B. eines Smartphone, eines Tablets, eines Laptops, etc.) des Benutzers. Ferner können Prozessinformationen ortsspezifisch aufgezeichnet werden, z.B. kann die Ortsermittlung per GPS erfolgen, und die Prozessinformationen können drahtlos in ein cloudbasiertes oder lokales Farm-Management-System übermittelt werden. Somit kann der Nutzer die Bodenbearbeitung dokumentieren und/oder es kann eine Fernüberwachung erfolgen.

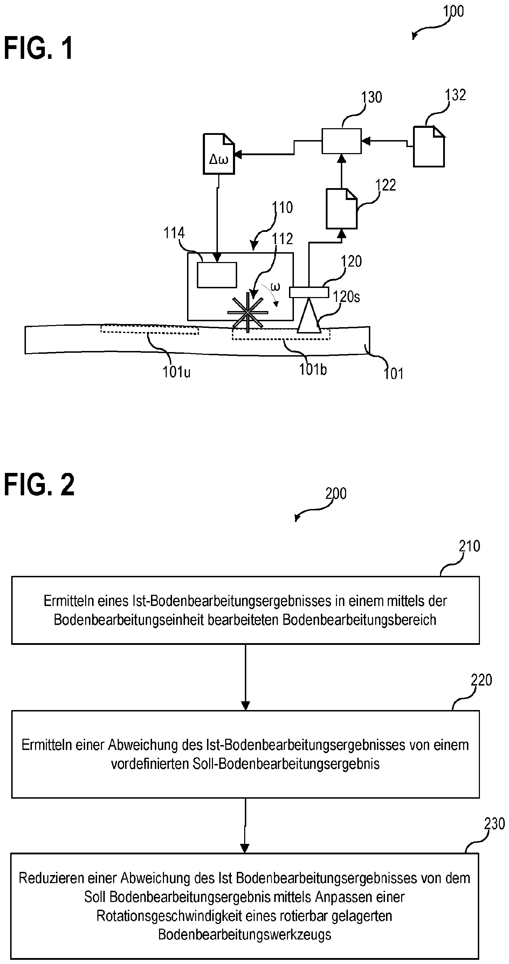

**Fig.1** veranschaulicht ein Werkzeugsystem 100 in einer schematischen Ansicht, gemäß verschiedenen Ausführungsformen. Das Werkzeugsystem 100 kann beispielsweise als Arbeitsmodul (auch als Arbeitsgerät bezeichnet) an einem geeigneten Fahrzeug (hier als Trägerfahrzeug bezeichnet) montiert werden, z.B. an einem Traktor oder einer anderen Zugmaschine.

Gemäß verschiedenen Ausführungsformen ist das Werkzeugsystem 100 eingerichtet zum Durchführen einer landwirtschaftlichen Bodenbearbeitung. Dabei wird, indem das Werkzeugsystem 100 relativ zu dem Boden 101 bewegt wird, sukzessive ein noch nicht mittels des Werkzeugsystems 100 bearbeiteter Bodenbereich 101u mittels des Werkzeugsystems 100 bearbeitet. Anschaulich wird ein mittels des Werkzeugsystems 100 bearbeiteter Bodenbereich 101b mit entsprechenden Bodeneigenschaften erzeugt, was als Bodenbearbeitungsergebnis verstanden werden kann.

Gemäß verschiedenen Ausführungsformen kann das Werkzeugsystem 100 eine Bodenbearbeitungseinheit 110 aufweisen. Die Bodenbearbeitungseinheit 110 kann mindestens ein rotierbar gelagertes Bodenbearbeitungswerkzeug 112 aufweisen. Ferner kann die Bodenbearbeitungseinheit 110 einen elektrischen Antrieb 114 (z.B. ein elektromechanisches Antriebssystem) aufweisen zum Antreiben (beispielsweise zum Rotieren) des mindestens einen rotierbar gelagerten Bodenbearbeitungswerkzeugs 112. Gemäß verschiedenen Ausführungsformen kann der elektrische Antrieb 114 mindestens einen Elektromotor aufweisen. Es versteht sich, dass der elektrische Antrieb 114 und das mindestens eine rotierbar gelagerte Bodenbearbeitungswerkzeug 112 mittels entsprechender Antriebstechnik und Lagerungstechnik beliebig ausgestaltet sein können, um die Bodenbearbeitungsfunktion zu realisieren.

Gemäß verschiedenen Ausführungsformen kann die Bodenbearbeitungseinheit 110 derart eingerichtet sein, dass eine Rotationsgeschwindigkeit ω des mindestens einen rotierbar gelagerten Bodenbearbeitungswerkzeugs 112 mittels des elektrischen Antriebs 114 verändert werden kann, z.B. auf einen vordefinierten Wert eingestellt werden kann. Somit kann beispielsweise ein von der Rotationsgeschwindigkeit ω abhängiges Bodenbearbeitungsergebnis in einem mittels der Bodenbearbeitungseinheit 110 bearbeiteten Bodenbearbeitungsbereich 101b erzeugt werden. Gemäß verschiedenen Ausführungsformen kann beispielsweise die Bodenkrümelung als Bodenbearbeitungsergebnis betrachtet werden, wobei eine höhere Rotationsgeschwindigkeit w beispielsweise zu einer geringeren Bodenkrümelung führen kann.

Es versteht sich, dass der mittels der Bodenbearbeitungseinheit 110 bearbeitete Bodenbearbeitungsbereich 101b bezüglich der Bewegungsrichtung des Werkzeugsystems 100 im Betrieb jeweils hinter der Bodenbearbeitungseinheit 110 entsteht. Somit beziehen sich ein Ist-Bodenbearbeitungsergebnis und/oder ein Soll-Bodenbearbeitungsergebnis auf einen Bereich im Boden, der bereits bearbeitet ist, und somit auch auf einen Bereich im Boden, der bezüglich der Bewegungsrichtung des Werkzeugsystems 100 hinter der Bodenbearbeitungseinheit 110 angeordnet ist.

Gemäß verschiedenen Ausführungsformen kann das Werkzeugsystem 100 ferner ein Sensorsystem 120 aufweisen. Das Sensorsystem 120 kann beispielsweise mindestens einen Sensor aufweisen. Sofern hilfreich kann das Sensorsystem 120 ein Computersystem aufweisen oder mit einem Computersystem kommunikativ gekoppelt sein zum Erfassen und/oder Verarbeiten der mittels des mindestens einen Sensors ermittelten Informationen.

Gemäß verschiedenen Ausführungsformen kann das Sensorsystem 120 eingerichtet sein, ein Ist-Bodenbearbeitungsergebnis 122 in dem mittels der Bodenbearbeitungseinheit 110 bearbeiteten Bodenbearbeitungsbereich 101b zu ermitteln. Es versteht sich, dass das Ist-Bodenbearbeitungsergebnis 122 bezüglich der Bewegungsrichtung des Werkzeugsystems 100 hinter der Bodenbearbeitungseinheit 110 angeordnet sein kann, um den bereits mittels der Bodenbearbeitungseinheit 110 bearbeiteten Bodenbearbeitungsbereich 101b mittels eines Lasers abzutasten, einer Kamera optisch zu erfassen, oder ähnliches.

Gemäß verschiedenen Ausführungsformen kann das Sensorsystem 120 einen Erfassungsbereich 120s aufweisen, innerhalb dessen die Informationen bezüglich des Bodens 101 gewonnen werden. Anschaulich kann der Erfassungsbereich 120s in Fahrtrichtung (bei vorwärtsfahrt) hinter dem rotierbar gelagerten Bodenbearbeitungswerkzeug 112 der Bodenbearbeitungseinheit 110 angeordnet sein.

Gemäß verschiedenen Ausführungsformen kann das Werkzeugsystem 100 ferner ein Regelungssystem 130 aufweisen. Das Regelungssystem 130 kann beispielsweise eingerichtet sein, die Rotationsgeschwindigkeit ω des mindestens einen rotierbar gelagerten Bodenbearbeitungswerkzeugs 112 zu ändern (Δω) basierend auf dem ermittelten Ist-Bodenbearbeitungsergebnis 122 und einem (z.B. vordefinierten) Soll-Bodenbearbeitungsergebnis 132. Somit kann beispielsweise eine Abweichung des Ist-Bodenbearbeitungsergebnisses 122 von dem Soll-Bodenbearbeitungsergebnis 132 reduziert oder minimiert werden. Es versteht sich, dass das Regelungssystem 130 entsprechend einen oder mehrere Prozessoren aufweisen kann oder beispielsweise ein Computersystem, um die entsprechenden Funktionen der Regelung zu realisieren. Ferner kann das Regelungssystem 130 entsprechend mit einem oder mehreren Prozessoren oder beispielsweise einem Computersystem kommunikativ gekoppelt sein, um die entsprechenden Funktionen der Regelung zu realisieren. Ferner kann beispielsweise ein Motorcontroller verwendet werden, um die Ist-Rotationsgeschwindigkeit des rotierbar gelagerten Bodenbearbeitungswerkzeugs 112 gemäß einem vordefinierten Wert einzustellen, wobei der vordefinierte Wert dem Motorcontroller von dem Regelungssystem 130 bereitgestellt wird.

**Fig.2** veranschaulicht ein Verfahren 200 zur landwirtschaftlichen Bodenbearbeitung mittels einer Bodenbearbeitungseinheit, z.B. mittels der in Fig.1 dargestellten Bodenbearbeitungseinheit 110, gemäß verschiedenen Ausführungsformen.

Das Verfahren 200 kann beispielsweise Folgendes aufweisen: in 210, Ermitteln eines Ist-Bodenbearbeitungsergebnisses in einem mittels der Bodenbearbeitungseinheit bearbeiteten Bodenbearbeitungsbereich; in 220, Ermitteln einer Abweichung des Ist-Bodenbearbeitungsergebnisses von einem (z.B. vordefinierten) Soll-Bodenbearbeitungsergebnis; und, in 230, Reduzieren oder Minimieren einer Abweichung des Ist-Bodenbearbeitungsergebnisses von dem Soll-Bodenbearbeitungsergebnis mittels Anpassen einer Rotationsgeschwindigkeit eines rotierbar gelagerten Bodenbearbeitungswerkzeugs.

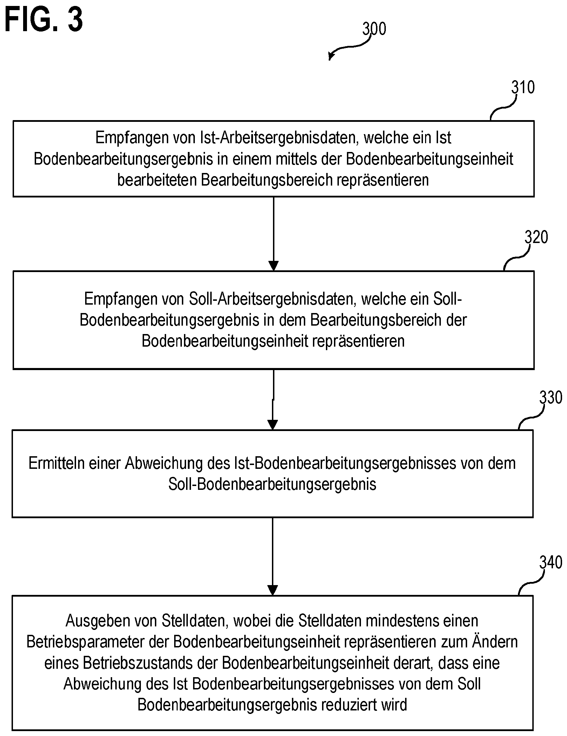

**Fig.3** veranschaulicht ein Verfahren 300 zur landwirtschaftlichen Bodenbearbeitung mittels einer Bodenbearbeitungseinheit, z.B. mittels der in Fig.1 dargestellten Bodenbearbeitungseinheit 110, gemäß verschiedenen Ausführungsformen.

Das Regelverfahren 300 kann beispielsweise Folgendes aufweisen: in 310, Empfangen von Ist-Arbeitsergebnisdaten, welche ein Ist-Bodenbearbeitungsergebnis in einem mittels der Bodenbearbeitungseinheit bearbeiteten Bearbeitungsbereich repräsentieren; in 320, Empfangen von Soll-Arbeitsergebnisdaten, welche ein Soll-Bodenbearbeitungsergebnis in dem Bearbeitungsbereich der Bodenbearbeitungseinheit repräsentieren; in 330, Ermitteln einer Abweichung des Ist-Bodenbearbeitungsergebnisses von dem Soll-Bodenbearbeitungsergebnis; und, in 340, Ausgeben von Stelldaten, wobei die Stelldaten mindestens einen Betriebsparameter der Bodenbearbeitungseinheit repräsentieren zum Ändern eines Betriebszustands der Bodenbearbeitungseinheit derart, dass eine Abweichung des Ist-Bodenbearbeitungsergebnisses von dem Soll-Bodenbearbeitungsergebnis reduziert wird.

Gemäß verschiedenen Ausführungsformen kann der mindestens eine Betriebsparameter eine Rotationsgeschwindigkeit eines rotierbar gelagerten Bodenbearbeitungswerkzeugs 112 der Bodenbearbeitungseinheit 110 repräsentieren.

Gemäß verschiedenen Ausführungsformen kann das hierin beschriebene Regelverfahren 300 in einer entsprechenden Regelvorrichtung implementiert sein oder werden beispielsweise in Form von Hardware und/oder Software. Entsprechend kann beispielsweise ein nichtflüchtiges Speichermedium Instruktionen aufweisen, welche, ausgeführt von mindestens einem Prozessor, das Regelverfahren ausführen.

**Fig.4** veranschaulicht ein Sensorsystem 400 in einer schematischen Ansicht, gemäß verschiedenen Ausführungsformen. Das Sensorsystem 400 kann beispielsweise das Sensorsystem 120 des Werkzeugsystems 100 sein.

Gemäß verschiedenen Ausführungsformen kann das Sensorsystem 400 eingerichtet sein, Höheninformationen 400i zu erfassen und basierend auf den erfassten Höheninformationen 400i ein zweidimensionales oder dreidimensionales Bodenprofil 400p des bearbeiteten Bodenbearbeitungsbereichs zu ermitteln.

Beispielsweise kann das Sensorsystem 120 einen Lasersensor 420 aufweisen zum Erfassen der Höheninformationen 400i. Der Lasersensor 420 kann einen Erfassungsbereich 420s aufweisen, wobei ein oder mehrere Laserstrahlen innerhalb des Erfassungsbereichs 420s über den Boden 101 gescannt werden können. Es versteht sich, dass die Höheninformationen 400i entsprechend als Daten verarbeitet werden, z.B. können die Messdaten des Lasersensors 420 verwendet werden, um ein zweidimensionales oder dreidimensionales Bodenprofil 400p des Bodens 101 zu erstellen.

Gemäß verschiedenen Ausführungsformen kann das Sensorsystem 120 einen optischen Sensor 430 aufweisen zum Ermitteln eines zweidimensionalen oder dreidimensionalen Bodenprofils 400o des bearbeiteten Bodenbearbeitungsbereichs. Der optische Sensor 430 kann beispielsweise eine Kamera sein. Der optische Sensor 430 kann beispielsweise einen Bildbereich 430s aufweisen, wobei ein oder mehrere Bilder des Bodens 101 in dem Bildbereich 430s aufgenommen werden können.

Ferner kann das Sensorsystem 120, gemäß verschiedenen Ausführungsformen, einen Radar-Sensor 440 aufweisen zum Erfassen von einer oder mehreren Messgrößen, anhand derer ein oder mehrere Bodenparameter ermittelt werden können. Beispielsweise können Reflexionseigenschaften und/oder Adsorptionseigenschaften des Bodens 101 in dem bearbeiteten Bodenbearbeitungsbereich mittels des Radar-Sensors 440 (z.B. unter Verwendung von Hochfrequenzstrahlung) erfasst werden, um daraus beispielsweise die Bodenkrümelung 401 des Bodens 101 und/oder die Einmischung 403 organischer Masse in den Boden 101 zu ermitteln. Der Radar-Sensor 440 kann beispielsweise einen Sensorbereich 440s aufweisen, wobei Radarstrahlung in den Sensorbereich 440s emittiert und aus dem Sensorbereich 440s detektiert werden kann.

Gemäß verschiedenen Ausführungsformen kann das Bodenbearbeitungsergebnis die Bodenkrümelung 401 des Bodens 101 sein. Ferner kann das Bodenbearbeitungsergebnis alternativ zu der Bodenkrümelung 401 oder zusätzlich zu der Bodenkrümelung 401 die Einmischung 403 organischer Masse in den Boden 101 sein.

Gemäß verschiedenen Ausführungsformen kann ein weiteres Sensorsystem verwendet werden beispielsweise zum Erfassen mindestens eines Bodenzustands des Bodens 101 vordem Bearbeiten des Bodenbearbeitungsbereichs und/oder außerhalb des bearbeiteten Bodenbearbeitungsbereichs. Der mindestens eine Bodenzustand des Bodens kann eines von Folgendem aufweisen: die Pflanzenmasse auf und/oder in dem Boden, eine Bodenoberflächenstruktur, die Bodenfeuchte, und/oder die Bodendichte.

**Fig.5** veranschaulicht eine Bodenbearbeitungseinheit, z.B. die Bodenbearbeitungseinheit 110 des Werkzeugsystems 100 in einer schematischen Ansicht, gemäß verschiedenen Ausführungsformen.

Gemäß verschiedenen Ausführungsformen kann die Bodenbearbeitungseinheit 110 zusätzlich zu dem aktiv rotierenden Bodenbearbeitungswerkzeug 112 mindestens ein gezogenes Bodenbearbeitungswerkzeug 512 aufweisen zum Bearbeiten des Bodens 101.

Gemäß verschiedenen Ausführungsformen kann die Bodenbearbeitungseinheit 110 mittels eines elektrischen Kabels 510 und einer entsprechenden Schnittstelle mit elektrischen Leistung versorgt werden zum elektrischen Antreiben des während der Bodenbearbeitung elektrisch angetrieben rotierenden Bodenbearbeitungswerkzeug 112.

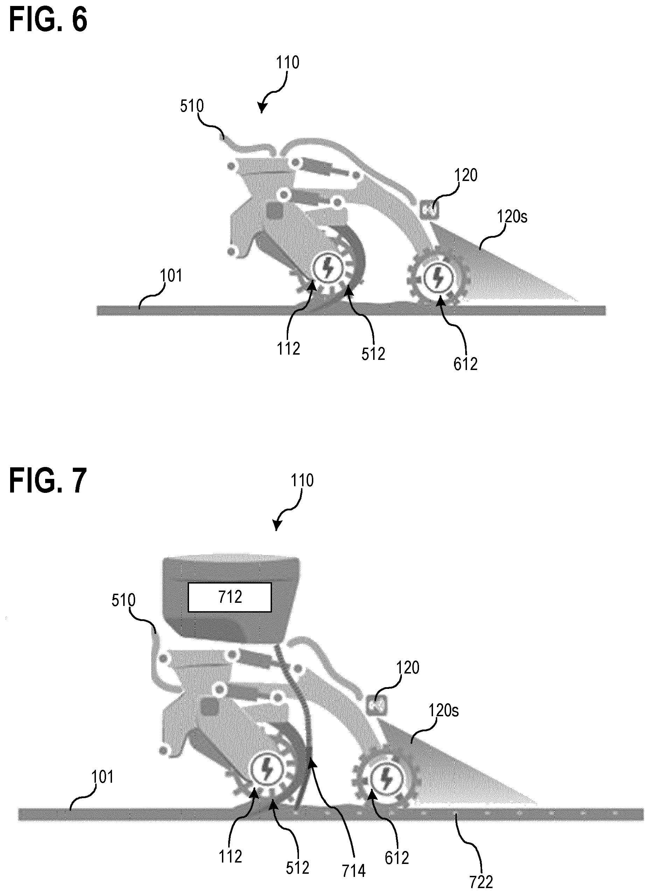

**Fig.6** veranschaulicht eine Bodenbearbeitungseinheit, z.B. die Bodenbearbeitungseinheit 110 des Werkzeugsystems 100 in einer schematischen Ansicht, gemäß verschiedenen Ausführungsformen.

Gemäß verschiedenen Ausführungsformen kann die Bodenbearbeitungseinheit 110 ferner mindestens ein Nachlaufwerkzeug 612 aufweisen. Das mindestens eine Nachlaufwerkzeug 612 kann beispielsweise elektrisch angetrieben sein zum Erzeugen einer Vortriebskraft und/oder zum Bearbeiten des Bodens 101. Das mindestens eine Nachlaufwerkzeug 612 kann beispielsweise derart eingerichtet sein, dass eine Tiefenführung des mindestens einen rotierbar gelagerten Bodenbearbeitungswerkzeugs 112 und/oder des mindestens einen gezogenen Werkzeugs 512 gewährleistet sein kann.

Gemäß verschiedenen Ausführungsformen kann die Bodenbearbeitungseinheit 110 derart modular aufgebaut sein, dass die Bodenbearbeitungseinheit 110 mit dem mindestens einen Nachlaufwerkzeug 612 und ohne das mindestens eine Nachlaufwerkzeug 612 betrieben werden kann. Mit dem mindestens einen Nachlaufwerkzeug 612, wie in Fig.6 schematisch veranschaulicht ist, kann beispielsweise eine Stoppelbearbeitung und/oder Gülleeinarbeitung erfolgen. Ohne das mindestens einen Nachlaufwerkzeug 612, wie in Fig.5 schematisch veranschaulicht ist, kann beispielsweise eine mechanische Unkrautbekämpfung erfolgen.

Gemäß verschiedenen Ausführungsformen kann die Bodenbearbeitungseinheit 110 derart eingerichtet sein, dass die Bodenbearbeitungseinheit 110 mittels des Kabels 510 zugeführte elektrische Leistung auch zum Versorgen des elektrisch angetriebenen mindestens einen Nachlaufwerkzeugs 612 verwendet wird.

**Fig.7** veranschaulicht eine Bodenbearbeitungseinheit, z.B. die Bodenbearbeitungseinheit 110 des Werkzeugsystems 100 in einer schematischen Ansicht, gemäß verschiedenen Ausführungsformen.

Gemäß verschiedenen Ausführungsformen kann ein Saatgutbehälter 712 an der Bodenbearbeitungseinheit 110 montiert sein oder werden. Ferner kann eine Vorrichtung 714 zum Einbringen von Saatgut 722 aus dem Saatgutbehälter 712 in den Boden 101 montiert sein oder werden. Somit kann das Saatgut 722 beispielsweise bereits während des Bearbeitens des Bodens 101 mittels der Bodenbearbeitungseinheit 100 in dem Boden 101 eingebracht werden. Mittels der in Fig.7 veranschaulichten Konfiguration der modularen Bodenbearbeitungseinheit 110 kann beispielsweise eine Saatbettbereitung mit Aussaat erfolgen.

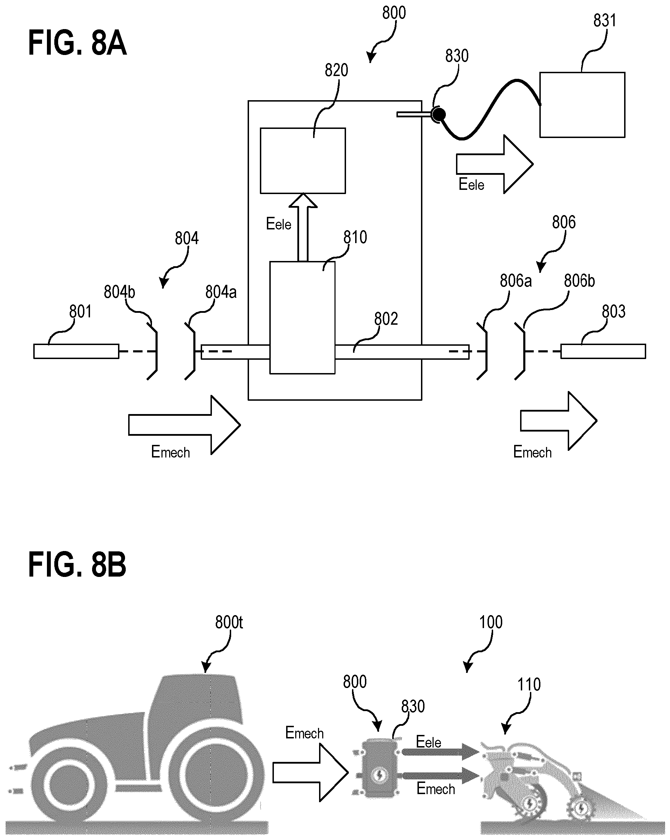

**Fig.8A** veranschaulicht ein Generatormodul 800 in einer schematischen Ansicht, gemäß verschiedenen Ausführungsformen.

Das Generatormodul 800 kann beispielsweise eine Welle 802 aufweisen sowie ein erstes Kupplungselement 804a zum Kuppeln 806 der Welle 802 mit einer angetriebenen Welle 801 (z.B. eine Zapfwelle eines Traktors oder eines anderen Trägerfahrzeugs) zum Einspeisen von mechanischer Energie Emech in das Generatormodul 800. Die angetriebene Welle 801 kann beispielsweise ein zu dem ersten Kupplungselement 804a passendes weiteres Kupplungselement 804b aufweisen zum Kuppeln 804 der Welle 802 des Generatormoduls 800 mit der angetriebenen Welle 801.

Ferner kann das Generatormodul 800 ein zweites Kupplungselement 806a aufweisen zum Kuppeln 806 einer anzutreibenden Welle 803 an die Welle 802 des Generatormoduls 800. Die anzutreibende Welle 803 kann beispielsweise ein zu dem zweiten Kupplungselement 806a passendes weiteres Kupplungselement 806b aufweisen.

Gemäß verschiedenen Ausführungsformen kann das zweite Kupplungselement 806a des Generatormoduls 800 in gleicher oder ähnlicher Weise ausgestaltet sein, wie das Kupplungselement 804b der angetriebenen Welle 801, so dass mechanische Energie Emech teilweise durch das Generatormodul 800 hindurch zu einem Verbraucher geleitet werden kann. Mit anderen Worten kann das Generatormodul 800 zwischen eine angetriebene Welle 801 und eine anzutreibende Welle 803 geschaltet werden. Somit kann mittels des Generatormoduls 800 auch mechanische Energie Emech bereitgestellt werden.

Gemäß verschiedenen Ausführungsformen kann das Generatormodul 800 mindestens einen mit der Welle 802 gekuppelten Generator 810 aufweisen zum Erzeugen von elektrischer Energie Eₑₗₑ aus einem Teil der eingespeisten mechanischen Energie Emech.

Gemäß verschiedenen Ausführungsformen kann das Generatormodul 800 einen elektrischen Energiespeicher 820 aufweisen zum Speichern der erzeugten elektrischen Energie Eₑₗₑ.

Ferner kann das Generatormodul 800 eine elektrische Schnittstelle 830 aufweisen zum Versorgen eines an die elektrische Schnittstelle 830 gekoppelten elektrischen Antriebs 831 direkt mit der erzeugten elektrischen Energie Eₑₗₑ oder mit der in dem elektrischen Energiespeicher 820 gespeicherten elektrischen Energie Eₑₗₑ.

Gemäß verschiedenen Ausführungsformen kann das Generatormodul 800 dazu verwendet werden, einer Bodenbearbeitungseinheit, z.B. die Bodenbearbeitungseinheit 110 des Werkzeugsystems 100, mit elektrischer Energie Eₑₗₑ zu versorgen. Beispielsweise können bei Bedarf der elektrische Antrieb des rotierbar gelagerten Bodenbearbeitungswerkzeugs 112 und/oder des Nachlaufwerkzeugs 612 mittels des Generatormoduls 800 mit elektrischer Energie Eₑₗₑ versorgt werden. Dies kann beispielsweise notwendig sein, wenn ein Trägerfahrzeug nicht für eine derartige Energieversorgung ausgelegt ist, wie beispielsweise in Fig.8B veranschaulicht ist, allerdings eine angetriebene Welle 801 aufweist.

**Fig.8B** veranschaulicht Trägerfahrzeug 800t und ein Werkzeugsystem, z.B. das Werkzeugsystem 100, gemäß verschiedenen Ausführungsformen. Gemäß verschiedenen Ausführungsformen ist ein Generatormodul 800 an dem Trägerfahrzeug 800t montiert zum Versorgen des Werkzeugsystems 100 mit elektrischer Energie Eₑₗₑ.

Gemäß verschiedenen Ausführungsformen können das Trägerfahrzeug 800t und das Generatormodul 800 derart eingerichtet sein, dass die mechanische Energie E_{mech} mittels des Trägerfahrzeugs 800t bereitgestellt wird und an das angekuppelte Generatormodul 800 übertragen wird. Das Werkzeugsystem 100 kann beispielsweise elektrische Energie Eₑₗₑ mittels einer elektrischen Verbindung zu der Schnittstelle 830 des Generatormoduls 800 beziehen. Somit kann beispielsweise mindestens ein elektrischer Antrieb der Bodenbearbeitungseinheit 110 bzw. des Werkzeugsystems 100 mit elektrischer Energie Eₑₗₑ versorgt werden.

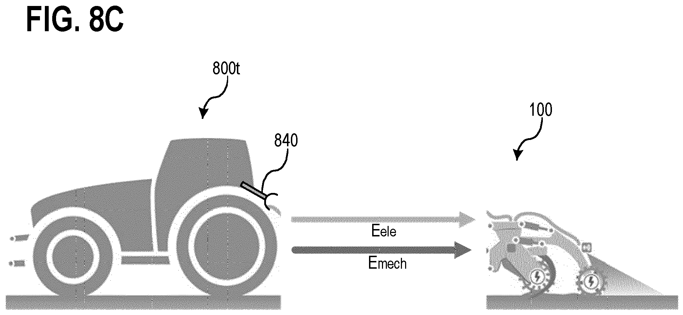

Sofern das Trägerfahrzeug 800t derart ausgestaltet ist, dass dieses auch ohne das Generatormodul 800 ausreichend elektrische Energie Eₑₗₑ für die Bodenbearbeitungseinheit 110 zur Verfügung stellen kann, kann die Bodenbearbeitungseinheit 110 direkt an eine entsprechende elektrischen Schnittstelle 840 des Trägerfahrzeugs 800t gekoppelt werden und somit von dem Trägerfahrzeug 800t mit elektrischer Energie Eₑₗₑ versorgt werden, wie in **Fig.8C** veranschaulicht ist.

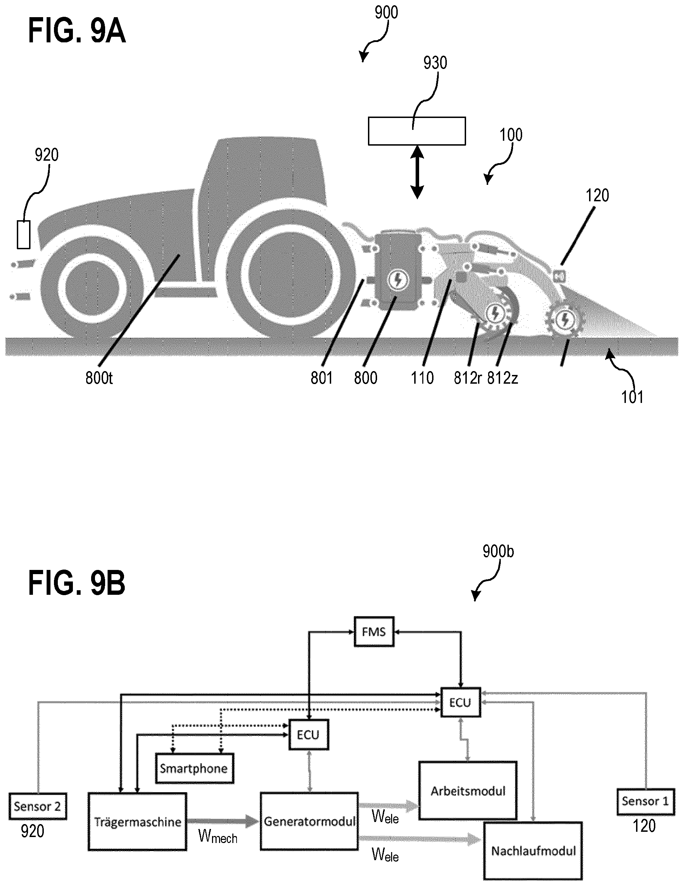

**Fig.9A** veranschaulicht ein Gespann 900 aus einem Trägerfahrzeug (auch als Trägermaschine bezeichnet) 800t und einem Werkzeugsystems 100, wobei das Werkzeugsystem 100 mittels eines Generatormoduls 800 mit elektrischer Energie versorgt wird, wobei dem Generatormoduls 800 mittels einer Gelenkwelle 801 des Trägerfahrzeugs 800t mechanische Energie zugeführt wird. Das Werkzeugsystem 100 weist eine elektrisch angetriebene Bodenbearbeitungseinheit (auch als Arbeitsmodul bezeichnet) 110 auf. Die Bodenbearbeitungseinheit 110 ist eingerichtet, den Boden 101 mittels elektrisch angetriebener rotierender Zinken 812r (als ein Beispiel für ein rotierbar gelagertes Bodenbearbeitungswerkzeug) zu bearbeiten und optional mittels gezogener Zinken 812z (als ein Beispiel für ein gezogenes Werkzeug). Ferner kann der Boden 101 mittels eines elektrisch angetriebenen Nachlaufwerkzeugs (auch als Nachlaufmodul bezeichnet) 612 bearbeitet werden. Bodenbearbeitungseinheit 110 weist beispielsweise einen Sensor 120 auf zum Ermitteln eines Bodenbearbeitungsergebnisses mittels eines entsprechend ausgestalteten Regelvorrichtung 930. Der Sensor 120 zum Ermitteln des Bodenbearbeitungsergebnisses kann am Heck des Gespanns 900 bzw. am Heck des Werkzeugsystems 100 montiert sein. Ein zusätzlicher Sensor 920 kann an der Front des Gespanns 900 bzw. an der Front des Trägerfahrzeugs 800t montiert sein. Mittels des zusätzlichen Sensors 920 können beispielsweise Bodeneigenschaften vor dem Bearbeiten des Bodens 101 ermittelt werden.

**Fig.9B** zeigt ein Blockdiagramm 900b einer beispielhaften Leistungsverteilung und Kommunikation der Steuer/Regel-Informationen, gemäß verschiedenen Ausführungsformen.

Gemäß verschiedenen Ausführungsformen kann mechanische Leistung Wmech (analog zur mechanischen Energie Emech) von dem Trägerfahrzeug 800t an das Generatormodul 800 übertragen werden. Mittels des Generatormoduls 800 kann elektrische Leistung Wele (analog zur elektrischen Energie Eₑₗₑ) erzeugt und an das Arbeitsmodul und das Nachlaufmodul übertragen werden.

Ein Computersystem (z.B. ein Steuergerät ECU des Trägerfahrzeugs 800t und/oder ein Steuergerät des Arbeitsmoduls) kann entsprechende Steuer/Regelfunktionen ausführen. Dazu kann das Computersystem kommunikativ mit den jeweiligen Komponenten gekoppelt sein zum Übertragen der Steuer/Regel-Signale und/oder der Sensorsignale. Beispielsweise kann das Computersystem über ein Bussystem mit dem Generatormodul 800, dem Arbeitsmodul 110, dem Nachlaufmodul 612, dem Sensor 120, und optional dem zusätzlichen Sensor 920 kommunikativ gekoppelt. Externe Steuer/Regel-Signale und/oder externe Sensorsignale können mittels eines dezentralen Systems (z.B. eines FMS, Farm-Management-Systems) und dem Computersystem berücksichtig werden, z.B. kann dazu das Computersystem mit der Trägermaschine kommunikativ gekoppelt sein sowie mit dem FMS. Optional können Daten zwischen dem Computersystem und einem mobilen Gerät (z.B. einem Smartphone, einem Tablet, etc.) ausgetauscht werden, z.B. zum Ausgeben von Daten an einen Benutzer oder zum Eingeben von Daten durch einen Benutzer.

Gemäß verschiedenen Ausführungsformen kann das Computersystem lokal in dem Trägerfahrzeug 800t bereitgestellt sein. Alternativ dazu kann aber eine dezentrale Datenverarbeitung implementiert sein, bei dem die Daten mittels Sendern und Empfängern entsprechend übermittelt werden.

Im Folgenden werden optionale Details eines Generatormoduls beschrieben. Das Generatormodul kann beispielsweise eine mechanische Koppelschnittstelle zum Trägerfahrzeug (z.B. zu einem Traktor) aufweisen sowie eine mechanische Koppelschnittstelle für ein Arbeitsgerät, welchem mechanische Leistung zugeführt werden soll.

Das Generatormodul kann beispielsweise an die mechanische Zapfwelle des Trägerfahrzeugs (z.B. eines Traktors) gekuppelt werden. Das Generatormodul kann eingerichtet sein zumindest einen Teil der zugeführten mechanischen Leistung in elektrische Leistung zu wandeln. Dabei kann die mechanische Leistung mittels eines Getriebes an mindestens einen Generator des Generatormoduls übertragen werden. Das Getriebe kann beispielsweise derart ausgestaltet sein, dass ein mechanischer Durchtrieb erfolgen kann, beispielsweise zur Bereitstellung von mechanischer Leistung durch das Generatormodul sofern erforderlich.

Gemäß verschiedenen Ausführungsformen kann eine hybride Leistungsbereitstellung durch das Generatormodul erfolgen. Die elektrische Leistungsbereitstellung kann beispielsweise mittels einer DC-Schnittstelle erfolgen. Beispielsweise kann eine (z.B. genormten) AEF-(Agricultural Industry Electronics Foundation)-Steckdose als Schnittstelle für die elektrische Leistung verwendet werden. Die mechanische Leistungsbereitstellung kann mittels eines (z.B. genormten) Zapfwellenprofils erfolgen.

Gemäß verschiedenen Ausführungsformen kann das Generatormodul zur Steuerung per Kabel (z.B. genormt) an das Trägerfahrzeug angeschlossen sein oder werden. Eine Steuerung und/oder eine Überwachung kann beispielsweise durch den Benutzer erfolgen, z.B. mittels eines trägerfahrzeugeigenen Datenbus-Terminals, z.B. eines ISO-BUS-Terminals. Alternativ dazu oder zusätzlich dazu kann die Steuerung und/oder die Überwachung per Smartphone, Tablet oder ähnlichen mobilen Geräten erfolgen.

Gemäß verschiedenen Ausführungsformen können Prozessdaten an das Farm-Management-System (FMS) übertragen werden zur Überwachung, Dokumentation und Optimierung der Bodenbearbeitungsprozesse.

Eine interne Kommunikation der jeweiligen Komponenten (z.B. der Sensoren, Motorsteuersignale, etc.) kann beispielsweise mittels eines CAN-("Controller Area Network")-Netzwerks erfolgen.

Im Folgenden werden optionale Details eines Arbeitsmoduls beschrieben. Das Arbeitsmodul kann sowohl ein oder mehrere rotierende Werkzeuge als auch ein oder mehrere gezogene Werkzeuge aufweisen. Ein optionales Nachlaufwerkzeug kann beispielsweise zur Tiefenführung verwendet werden. Ferner kann das Nachlaufwerkzeug zur Vortriebskrafterzeugung mittels eines elektrischen Antriebs eingerichtet sein.

Gemäß verschiedenen Ausführungsformen kann eine Sensoreinheit des Arbeitsmoduls das Arbeitsergebnis ermitteln, z.B. eine Bodenkrümelung und/oder eine Einmischung von organischem Material in den Boden.

Das Arbeitsmodul kann beispielsweise zur Steuerung per Kabel (z.B. genormt) an ein Trägerfahrzeug (z.B. einen Traktor) angeschlossen sein oder werden. Eine Steuerung und/oder eine Überwachung des Arbeitsmoduls kann durch einen Benutzer erfolgen, beispielsweise mittels eines trägerfahrzeugeigenen Daten-Bus-Terminals, z.B. eines ISO-BUS-Terminals. Alternativ dazu oder zusätzlich dazu kann eine Steuerung und/oder eine Überwachung durch den Benutzer per Smartphone, Tablet, etc. erfolgen.

Gemäß verschiedenen Ausführungsformen kann der Benutzer Vorgabewerte für das Arbeitsergebnis oder Vorgabe der Zielgrößen aus vordefinierten Daten (z.B. aus einer Karte mit ortspezifischen Vorgabewerten, aus einem individuell erstellte Nutzerprofil, etc.) definieren.

Mittels eines Sensorsystems können beispielsweise Ist-Größen, welche das Bodenbearbeitungsergebnis repräsentieren, erfasst und/oder ermittelt werden. Sofern die Ist-Größen nicht von dem Computersystem (z.B. dem Steuergerät ECU des Trägerfahrzeugs und/oder dem Steuergerät des Arbeitsmoduls) ermittelt werden, können diese von extern an das Computersystem übertragen werden.

Das Computersystem kann beispielsweise eingerichtet sein, den jeweiligen IstWert mit einem zugehörigen Soll-Wert zu vergleichen und beispielsweise die Drehzahl des Bearbeitungswerkzeugs und/oder des Nachlaufwerkzeugs anpassen. Das Bearbeitungswerkzeug kann als ein Prozessmodul ausgestaltet sein.

Gemäß verschiedenen Ausführungsformen kann beispielsweise eine Fahrgeschwindigkeit des Gesamtsystems ermittelt werden. Dazu können das Arbeitsmodul und/oder das Generatormodul eine entsprechende GPS-(Globales Positionsbestimmungssystem)-Vorrichtung aufweisen zum Ermitteln einer Bewegung in GPS-Koordinaten.

Gemäß verschiedenen Ausführungsformen muss eine Regelung des Arbeitsmoduls nicht lokal implementiert sein, sondern kann beispielsweise auch als Teil des Farm-Management-Systems implementiert sein. Eine Übertragung der Prozessdaten des Arbeitsmoduls an das Farm-Management-System (FMS) kann ferner zur Überwachung, Dokumentation und/oder Optimierung erfolgen.

Gemäß verschiedenen Ausführungsformen kann das Arbeitsergebnis mittels eines LIDAR-("Light Detection And Ranging")-Lasersensor ermittelt werden. Der LIDAR-Lasersensor und/oder ein anderer Sensor können/kann beispielsweise am Heck des Arbeitsmoduls montiert sein. Basierend auf den Messdaten des LIDAR-Lasersensors und/oder eines anderen Sensors kann beispielsweise ein 2D-Profil des Arbeitsergebnisses erstellt werden. Basierend auf Höheninformationen des 2D-Profils kann beispielsweise die Bodenkrümelung ermittelt werden. Die Einmischung von organischer Masse kann beispielsweise basierend auf Farbintensitätsinformationen des 2D-Profils ermittelt werden.

Gemäß verschiedenen Ausführungsformen kann alternativ oder zusätzlich zu einem LIDAR-Sensor ein Radar-Sensor verwendet werden. Die Bodenkrümelung und/oder die Einmischung kann/können beispielsweise basierend auf Reflexion und/oder Adsorption der Radarstrahlung (z.B. einer Hochfrequenzstrahlung) ermittelt werden. Ferner kann ein zusätzlicher Radar-Sensor verwendet werden, welcher an der Front des Trägerfahrzeugs oder an der Front des Arbeitsmoduls montiert sein kann zur Bestimmen der Pflanzenmasse und/oder der Bodenoberflächenstruktur (z.B. der Bodenfeuchte und/oder der Bodendichte).

Gemäß verschiedenen Ausführungsformen können die Informationen einer Radar-Einheit zur Regelung der Drehzahlen der Prozesseinheit (z.B. der Bodenbearbeitungseinheit 110) und/oder des Nachlaufwerkzeugs verwendet werden. Gemäß verschiedenen Ausführungsformen kann das Arbeitsmodul eine DC-Schnittstelle aufweisen, z.B. mit einer (z.B. genormter) AEF-Steckdose zur elektrischen Leistungsaufnahme entweder von dem Trägerfahrzeug direkt oder von dem Generatormodul.

Gemäß verschiedenen Ausführungsformen kann die arbeitsmodulinterne, werkzeugsysteminterne, und/oder die gespanninterne Kommunikation der jeweiligen Komponenten mittels eins CAN-Netzwerks erfolgen.

Gemäß verschiedenen Ausführungsformen kann das Arbeitsmodul bzw. das Werkzeugsystem modular ausgestaltet sein und mehrere funktionsspezifische Module aufweisen. Somit kann das Arbeitsmodul an verschiedene Einsatzszenarien angepasst werden, z.B. in einer Variante zur Stoppelbearbeitung und/oder Gülleeinarbeitung (siehe beispielsweise Fig.6), in einer weiteren Variante (ohne Nachlaufwerkzeug) zur mechanischen Unkrautbekämpfung (siehe beispielsweise Fig.5), und in einer noch weiteren Variante zur (mit zusätzlicher Applikationseinheit für Saatgut) zum Ausbringen von Pflanzensamen (siehe beispielsweise Fig.7).

Im Folgenden sind verschiedene Beispiele beschrieben, welche sich auf das vorangehend Beschriebene und/oder das in den Figuren Dargestellte beziehen können.

Beispiel 1 ist ein Werkzeugsystem 100 zur landwirtschaftlichen Bodenbearbeitung, wobei das Werkzeugsystem aufweist: eine Bodenbearbeitungseinheit 110 aufweisend mindestens ein rotierbar gelagertes Bodenbearbeitungswerkzeug 112 und einen elektrischen Antrieb 114 zum Rotieren des mindestens einen rotierbar gelagerten Bodenbearbeitungswerkzeugs 112, wobei die Bodenbearbeitungseinheit 110 eingerichtet ist, eine Rotationsgeschwindigkeit ω des mindestens einen rotierbar gelagerten Bodenbearbeitungswerkzeugs 112 mittels des elektrischen Antriebs 114 zu verändern zum Erzeugen eines von der Rotationsgeschwindigkeit ω abhängigen Bodenbearbeitungsergebnisses in einem mittels der Bodenbearbeitungseinheit 110 bearbeiteten Bodenbearbeitungsbereich 101b, wobei die Bodenbearbeitungseinheit 110 ferner mindestens ein Nachlaufwerkzeug 612 zum Bearbeiten des Bodenbearbeitungsbereichs 101b aufweist, wobei das mindestens eine Nachlaufwerkzeug 612 elektrisch angetrieben ist zum Erzeugen einer Vortriebskraft; ein Sensorsystem 120, welches eingerichtet ist, ein Ist-Bodenbearbeitungsergebnis 122 in dem mittels der Bodenbearbeitungseinheit 110 bearbeiteten Bodenbearbeitungsbereich 101b zu ermitteln; und ein Regelungssystem 130, welches eingerichtet ist, basierend auf dem ermittelten Ist Bodenbearbeitungsergebnis 122 und einem (z.B. vordefinierten) Soll-Bodenbearbeitungsergebnis 132 die Rotationsgeschwindigkeit ω des mindestens einen rotierbar gelagerten Bodenbearbeitungswerkzeugs 112 zu ändern zum Reduzieren einer Abweichung des Ist-Bodenbearbeitungsergebnisses 122 von dem Soll-Bodenbearbeitungsergebnis 132.

In Beispiel 2 kann das Werkzeugsystem 100 gemäß Beispiel 1 ferner aufweisen, dass das Sensorsystem 120 eingerichtet ist, Höheninformationen 400i zu erfassen und basierend auf den erfassten Höheninformationen 400i ein zweidimensionales oder dreidimensionales Bodenprofil 400p des bearbeiteten Bodenbearbeitungsbereichs 101b zu ermitteln.

In Beispiel 3 kann das Werkzeugsystem 100 gemäß Beispiel 2 ferner aufweisen, dass das Sensorsystem 120 einen Lasersensor 420 aufweist zum Erfassen der Höheninformationen 400i.

In Beispiel 4 kann das Werkzeugsystem 100 gemäß einem der Beispiele 1 bis 3 ferner aufweisen, dass das Sensorsystem 120 einen optischen Sensor 430 aufweist. Der optische Sensor 430 kann derart eingerichtet sein, das ein zweidimensionales oder dreidimensionales Bodenprofil 400p des bearbeiteten Bodenbearbeitungsbereichs 101b ermittelt werden kann.

In Beispiel 5 kann das Werkzeugsystem 100 gemäß einem der Beispiele 1 bis 4 ferner aufweisen, dass das Bodenbearbeitungsergebnis eine Bodenkrümelung 401 des Bodens 101 ist.

In Beispiel 6 kann das Werkzeugsystem 100 gemäß einem der Beispiele 1 bis 5 ferner aufweisen, dass das Bodenbearbeitungsergebnis die Einmischung organischer Masse 403 in den Boden 101 ist.

In Beispiel 7 kann das Werkzeugsystem 100 gemäß einem der Beispiele 1 bis 6 ferner aufweisen, dass das Sensorsystem 120 einen Radar-Sensor 440 aufweist. Der Radar-Sensor 440 kann derart eingerichtet sein, dass Reflexionseigenschaften und/oder Adsorptionseigenschaften des Bodens mittels Radarstrahlung (z.B. mittels Hochfrequenzstrahlung) ermittelt werden können und basierend darauf zum Ermitteln der Bodenkrümelung 401 des Bodens 101 und/oder der Einmischung organischer Masse 403 in den Boden 101.

In Beispiel 8 kann das Werkzeugsystem 100 gemäß einem der Beispiele 1 bis 7 ferner aufweisen: ein weiteres Sensorsystem 920, welches eingerichtet ist, mindestens einen Bodenzustand des Bodens 101 vor dem Bearbeiten des Bodenbearbeitungsbereichs und/oder außerhalb des bearbeiteten Bodenbearbeitungsbereichs 101b zu ermitteln.

In Beispiel 9 kann das Werkzeugsystem 100 gemäß Beispiel 8 ferner aufweisen, dass der mindestens eine Bodenzustand des Bodens 101 eines von Folgendem aufweist oder ist: die Pflanzenmasse auf und/oder in dem Boden, eine Bodenoberflächenstruktur, die Bodenfeuchte, und/oder die Bodendichte.

In Beispiel 10 kann das Werkzeugsystem 100 gemäß einem der Beispiele 1 bis 9 ferner aufweisen, dass die Bodenbearbeitungseinheit 110 ferner mindestens ein gezogenes Werkzeug 512 aufweist zum Bearbeiten des Bodens 101.

In Beispiel 11 kann das Werkzeugsystem 100 gemäß einem der Beispiele 1 bis 10 ferner aufweisen, dass das mindestens eine Nachlaufwerkzeug 612 zur Tiefenführung des mindestens einen rotierbar gelagerten Bodenbearbeitungswerkzeugs 110 und/oder zur Tiefenführung des mindestens einen gezogenen Werkzeugs 512 eingerichtet sein kann.

In Beispiel 12 kann das Werkzeugsystem 100 gemäß Beispiel 11 ferner aufweisen, dass die Bodenbearbeitungseinheit 110 derart modular aufgebaut ist, dass diese mit und ohne das mindestens ein Nachlaufwerkzeug betrieben werden kann.

In Beispiel 13 kann das Werkzeugsystem 100 gemäß einem der Beispiele 1 bis 12 ferner aufweisen: einen Saatgutbehälter 712 und eine Vorrichtung 714 zum Einbringen von Saatgut aus dem Saatgutbehälter 712 in den Boden 101 während des Bearbeitens des Bodens 101 mittels der Bodenbearbeitungseinheit 110.

In Beispiel 14 kann das Werkzeugsystem 100 gemäß einem der Beispiele 1 bis 13 ferner aufweisen: ein Generatormodul 800 zum Versorgen des elektrischen Antriebs mit elektrischer Energie, wobei das Generatormodul 800 mindestens einen Generator 810 zum Erzeugen der elektrischen Energie aufweist, vorzugweise zum Wandeln von dem Generatormodul 800 zugeführter mechanischer Energie in elektrische Energie.

In Beispiel 15 kann das Werkzeugsystem 100 gemäß Beispiel ferner aufweisen, dass das Generatormodul 800 mindestens einen Energiespeicher 820 aufweist zum Speichern der erzeugten elektrischen Energie.

Beispiel 16 ist ein Trägerfahrzeug 800t und ein mit dem Trägerfahrzeug gekuppeltes Werkzeugsystem 100 gemäß einem der Beispiele 1 bis 13, wobei das Trägerfahrzeug 800t mindestens eine Energieversorgung aufweist und eingerichtet ist, den elektrischen Antrieb des Werkzeugsystems 100 mit elektrischer Energie zu versorgen.

Beispiel 17 ist ein Trägerfahrzeug 800t und ein mit dem Trägerfahrzeug 800t gekuppeltes Werkzeugsystem 100 gemäß dem Beispiel 14 oder 15, wobei das Trägerfahrzeug 800t eine angetriebene Welle 801 aufweist und derart eingerichtet ist, dem Generatormodul 800 mittels der angetriebenen Welle 801 mechanische Energie zuzuführen. Gemäß verschiedenen Ausführungsformen kann das Generatormodul 800 derart eingerichtet sein, dass ein Teil der zugeführten mechanischen Energie an das mit dem Trägerfahrzeug 800t gekuppelte Werkzeugsystem 100 weitergeleitet wird. Dabei kann das Werkzeugsystem 100 eingerichtet sein, einen Teil des Antriebs des Werkzeugs (z.B. des Bodenbearbeitungswerkzeugs 112 der Bodenbearbeitungseinheit 110 und/oder des Nachlaufwerkzeugs 612 der Bodenbearbeitungseinheit 110) und/oder des Vortriebs (z.B. erzeugt durch das Bodenbearbeitungswerkzeug 112 der Bodenbearbeitungseinheit 110 und/oder das Nachlaufwerkzeug 612 der Bodenbearbeitungseinheit 110) basierend auf der zugeführten mechanischen Energie bereitzustellen.

Beispiel 18 ist ein Generatormodul 800 aufweisend: eine Welle 802, ein erstes Kupplungselement 804a zum Ankuppeln der Welle 802 an eine angetriebene Welle 801 zum Einspeisen von mechanischer Energie in das Generatormodul 800; ein mit der Welle 802 gekuppeltes zweites Kupplungselement 806a zum Ankuppeln der Welle 802 an eine anzutreibende Welle 803 zum Bereitstellen von mechanischer Energie mittels des Generatormoduls 800; mindestens einen mit der Welle 802 gekuppelten Generator 810 zum Erzeugen von elektrischer Energie aus der eingespeisten mechanischen Energie; und eine elektrische Schnittstelle 830 zum Versorgen eines an die elektrische Schnittstelle 830 gekoppelten elektrischen Antriebs mit der elektrischen Energie.

In Beispiel 19 kann das Generatormodul 800 gemäß Beispiel 18 ferner aufweisen: einen elektrischen Energiespeicher 820 zum Speichern der erzeugten elektrischen Energie.

In Beispiel 20 kann das Generatormodul 800 gemäß Beispiel 18 oder 19 ferner aufweisen: ein Getriebe mittels dessen die Welle 802 und der mindestens eine Generator 810 miteinander gekuppelt sind.

In Beispiel 21 kann das Generatormodul 800 gemäß einem der Beispiele 18 bis 20 ferner aufweisen, dass die elektrische Schnittstelle 830 eine Gleichspannungsschnittstelle ist.

Beispiel 22 ist ein Verfahren zur landwirtschaftlichen Bodenbearbeitung mittels einer Bodenbearbeitungseinheit, das Verfahren aufweisend: Ermitteln eines Ist-Bodenbearbeitungsergebnisses in einem mittels der Bodenbearbeitungseinheit bearbeiteten Bodenbearbeitungsbereich; Ermitteln einer Abweichung des Ist-Bodenbearbeitungsergebnisses von einem vordefinierten Soll-Bodenbearbeitungsergebnis, und Reduzieren oder Minimieren einer Abweichung des Ist-Bodenbearbeitungsergebnisses von dem Soll-Bodenbearbeitungsergebnis mittels Anpassen einer Rotationsgeschwindigkeit eines rotierbar gelagerten Bodenbearbeitungswerkzeugs.

Beispiel 23 ist ein Regelverfahren zur landwirtschaftlichen Bodenbearbeitung mittels einer Bodenbearbeitungseinheit, das Regelverfahren aufweisend: Empfangen von Ist-Arbeitsergebnisdaten, welche ein Ist-Bodenbearbeitungsergebnis in einem mittels der Bodenbearbeitungseinheit bearbeiteten Bearbeitungsbereich repräsentieren, wobei die Bodenbearbeitungseinheit mindestens ein rotierbar gelagertes Bodenbearbeitungswerkzeug und mindestens ein Nachlaufwerkzeug zum Bearbeiten des Bearbeitungsbereichs aufweist, wobei das mindestens eine Nachlaufwerkzeug elektrisch angetrieben ist zum Erzeugen einer Vortriebskraft; Empfangen von Soll-Arbeitsergebnisdaten, welche ein vordefiniertes Soll-Bodenbearbeitungsergebnis in dem Bearbeitungsbereich der Bodenbearbeitungseinheit repräsentieren, Ermitteln einer Abweichung des Ist-Bodenbearbeitungsergebnisses von dem vordefinierten Soll-Bodenbearbeitungsergebnis, und Ausgeben von Stelldaten, wobei die Stelldaten mindestens einen Betriebsparameter der Bodenbearbeitungseinheit repräsentieren zum Ändern eines Betriebszustands der Bodenbearbeitungseinheit derart, dass eine Abweichung des Ist-Bodenbearbeitungsergebnisses von dem vordefinierten Soll-Bodenbearbeitungsergebnis reduziert oder minimiert wird; wobei der mindestens eine Betriebsparameter eine Rotationsgeschwindigkeit eines rotierbar gelagerten Bodenbearbeitungswerkzeugs der Bodenbearbeitungseinheit und eine Drehzahl des Nachlaufwerkzeugs der Bodenbearbeitungseinheit repräsentiert.

Beispiel 24 ist ein nichtflüchtiges Speichermedium aufweisend Instruktionen, welche, ausgeführt von mindestens einem Prozessor, das Verfahren gemäß einem der Beispiele 22 oder 23 ausführen.

Es versteht sich, dass Funktionen, Algorithmen, etc. die hierin mit Bezug auf ein Verfahren beschrieben sind auch in gleicher Weise in einer Regelvorrichtung implementiert sein können und vice versa.

## Patentansprüche

1. Werkzeugsystem (100) zur landwirtschaftlichen Bodenbearbeitung, das
Werkzeugsystem aufweisend:
eine Bodenbearbeitungseinheit (110) aufweisend mindestens ein rotierbar gelagertes Bodenbearbeitungswerkzeug (112) und einen elektrischen Antrieb (114) zum Rotieren des mindestens einen rotierbar gelagerten Bodenbearbeitungswerkzeugs (112), wobei die Bodenbearbeitungseinheit (110) eingerichtet ist, eine Rotationsgeschwindigkeit (ω) des mindestens einen rotierbar gelagerten Bodenbearbeitungswerkzeugs (112) mittels des elektrischen Antriebs (114) zu verändern zum Erzeugen eines von der Rotationsgeschwindigkeit (ω) abhängigen Bodenbearbeitungsergebnisses in einem mittels der Bodenbearbeitungseinheit (110) bearbeiteten Bodenbearbeitungsbereich (101b), wobei die Bodenbearbeitungseinheit (110) ferner mindestens ein Nachlaufwerkzeug (612) zum Bearbeiten des Bodenbearbeitungsbereichs (101b) aufweist, wobei das mindestens eine Nachlaufwerkzeug (612) elektrisch angetrieben ist zum Erzeugen einer Vortriebskraft;
ein Sensorsystem (120), welches eingerichtet ist, ein Ist-Bodenbearbeitungsergebnis (122) in dem mittels der Bodenbearbeitungseinheit (110) bearbeiteten Bodenbearbeitungsbereich (101b) zu ermitteln; und
ein Regelungssystem (130), welches eingerichtet ist, basierend auf dem ermittelten Ist-Bodenbearbeitungsergebnis (122) und einem Soll-Bodenbearbeitungsergebnis (132) die Rotationsgeschwindigkeit (ω) des mindestens einen rotierbar gelagerten Bodenbearbeitungswerkzeugs (112) zu ändern zum Reduzieren einer Abweichung des Ist-Bodenbearbeitungsergebnisses (122) von dem Soll-Bodenbearbeitungsergebnis (132).

2. Werkzeugsystem (100) gemäß Anspruch 1,
wobei das Sensorsystem (120) eingerichtet ist, Höheninformationen zu erfassen und basierend auf den Höheninformationen das Ist-Bodenbearbeitungsergebnis zu ermitteln.

3. Werkzeugsystem (100) gemäß Anspruch 1 oder 2,
wobei das Sensorsystem (120) einen Lasersensor aufweist zum Ermitteln des Ist-Bodenbearbeitungsergebnisses;
wobei das Sensorsystem (120) einen optischen Sensor aufweist zum Ermitteln des Ist-Bodenbearbeitungsergebnisses; und/oder
wobei das Sensorsystem (120) einen Radar-Sensor aufweist zum Ermitteln des Ist-Bodenbearbeitungsergebnisses.

4. Werkzeugsystem (100) gemäß Anspruch 3,
wobei das Sensorsystem (120) derart eingerichtet ist, das ein zweidimensionales oder dreidimensionales Bodenprofil (400p) des bearbeiteten Bodenbearbeitungsbereichs (101b) ermittelt werden kann.

5. Werkzeugsystem (100) gemäß Anspruch 3,
wobei der Radar-Sensor (440) derart eingerichtet ist, dass Reflexionseigenschaften und/oder Adsorptionseigenschaften des Bodens mittels Radarstrahlung ermittelt werden können.

6. Werkzeugsystem (100) gemäß einem der Ansprüche 1 bis 5,
wobei das Bodenbearbeitungsergebnis eine Bodenkrümelung des Bodens ist; und/oder
wobei das Bodenbearbeitungsergebnis eine Einmischung organischer Masse in den Boden ist.

7. Werkzeugsystem (100) gemäß einem der Ansprüche 1 bis 6,
wobei die Bodenbearbeitungseinheit (110) ferner mindestens ein gezogenes Werkzeug (512) aufweist zum Bearbeiten des Bodens.

8. Werkzeugsystem (100) gemäß einem der Ansprüche 1 bis 7,
wobei das mindestens eine Nachlaufwerkzeug (612) eingerichtet ist zur Tiefenführung des mindestens einen rotierbar gelagerten Bodenbearbeitungswerkzeugs (110) und/oder zur Tiefenführung mindestens eines gezogenen Werkzeugs (512).

9. Werkzeugsystem (100) gemäß einem der Ansprüche 1 bis 8, ferner
aufweisend:
ein Generatormodul (800) zum Versorgen des elektrischen Antriebs mit elektrischer Energie, wobei das Generatormodul (800) einen Generator (810) zum Erzeugen der elektrischen Energie aufweist, vorzugweise zum Wandeln von dem Generatormodul (800) zugeführter mechanischer Energie in elektrische Energie.

10. Werkzeugsystem (100) gemäß einem der Ansprüche 1 bis 9, ferner
aufweisend:
ein weiteres Sensorsystem (920), welches eingerichtet ist, mindestens einen Bodenzustand des Bodens (101) vor dem Bearbeiten des Bodenbearbeitungsbereichs und/oder außerhalb des bearbeiteten Bodenbearbeitungsbereichs (101b) zu ermitteln.

11. Werkzeugsystem (100) gemäß Anspruch 10,
wobei der mindestens eine Bodenzustand des Bodens (101) eines von Folgendem aufweist oder ist: die Pflanzenmasse auf und/oder in dem Boden, eine Bodenoberflächenstruktur, die Bodenfeuchte, und/oder die Bodendichte.

12. Werkzeugsystem (100) gemäß einem der Ansprüche 1 bis 11,
wobei das Regelungssystem (130) ferner eingerichtet ist, basierend auf dem ermittelten Ist-Bodenbearbeitungsergebnis (122) und dem Soll-Bodenbearbeitungsergebnis (132) eine Drehzahl und/oder ein Drehmoment des Nachlaufwerkzeugs zu ändern zum Reduzieren einer Abweichung des Ist-Bodenbearbeitungsergebnisses (122) von dem Soll-Bodenbearbeitungsergebnis (132).

13. Trägerfahrzeug (800t) und ein mit dem Trägerfahrzeug gekuppeltes
Werkzeugsystem (100) gemäß Anspruch 9,
wobei das Trägerfahrzeug (800t) eine angetriebene Welle (801) aufweist und derart eingerichtet ist, dem Generatormodul (800) mittels der angetriebenen Welle (801) mechanische Energie zuzuführen, wobei das Generatormodul vorzugsweise derart eingerichtet ist, dass ein Teil der zugeführten mechanischen Energie an das mit dem Trägerfahrzeug gekuppelte Werkzeugsystem weitergeleitet wird.

14. Regelverfahren zur landwirtschaftlichen Bodenbearbeitung mittels einer
Bodenbearbeitungseinheit, das Regelverfahren aufweisend:
Empfangen von Ist-Arbeitsergebnisdaten, welche ein Ist-Bodenbearbeitungsergebnis in einem mittels der Bodenbearbeitungseinheit bearbeiteten Bearbeitungsbereich repräsentieren, wobei die Bodenbearbeitungseinheit mindestens ein rotierbar gelagertes Bodenbearbeitungswerkzeug und mindestens ein Nachlaufwerkzeug zum Bearbeiten des Bearbeitungsbereichs aufweist, wobei das mindestens eine Nachlaufwerkzeug elektrisch angetrieben ist zum Erzeugen einer Vortriebskraft;
Empfangen von Soll-Arbeitsergebnisdaten, welche ein Soll-Bodenbearbeitungsergebnis in dem Bearbeitungsbereich der Bodenbearbeitungseinheit repräsentieren;
Ermitteln einer Abweichung des Ist-Bodenbearbeitungsergebnisses von einem Soll-Bodenbearbeitungsergebnis; und
Ausgeben von Stelldaten, wobei die Stelldaten mindestens einen Betriebsparameter der Bodenbearbeitungseinheit repräsentieren zum Ändern eines Betriebszustands der Bodenbearbeitungseinheit derart, dass eine Abweichung des Ist-Bodenbearbeitungsergebnisses von dem Soll-Bodenbearbeitungsergebnis reduziert wird;
wobei der mindestens eine Betriebsparameter eine Rotationsgeschwindigkeit des rotierbar gelagerten Bodenbearbeitungswerkzeugs der Bodenbearbeitungseinheit und eine Drehzahl des Nachlaufwerkzeugs der Bodenbearbeitungseinheit repräsentiert.

15. Speichermedium aufweisend Instruktionen, welche, ausgeführt von mindestens einem Prozessor, das Verfahren gemäß Anspruch 14 ausführen.

## Claims

1. A tool system (100) for agricultural soil tillage, the tool system comprising:
a soil tillage unit (110) comprising at least one rotatably mounted soil tillage tool (112) and an electric drive (114) for rotating the at least one rotatably mounted soil tillage tool (112), wherein the soil tillage unit (110) is configured to change a rotational speed (w) of the at least one rotatably mounted soil tillage tool (112) by means of the electric drive (114) for generating a soil tillage result depending on the rotational speed (w) within a soil tillage region (101b) cultivated by means of the soil tillage unit (110), wherein the soil tillage unit (110) further comprises at least one trailing tool (612) for cultivating the soil tillage region (101b), wherein the at least one trailing tool (612) is driven electrically for generating a propelling force;
a sensor system (120) which is configured to determine an actual soil tillage result (122) within the soil tillage region (101b) cultivated by means of the soil tillage unit (110); and
a control system (130) which is configured to change the rotational speed (ω) of the at least one rotatably mounted soil tillage tool (112) based on the determined actual soil tillage result (122) and a target soil tillage result (132) to reduce a deviation of the actual soil tillage result (122) from the target soil tillage result (132).

2. The tool system (100) according to claim 1,
wherein the sensor system (120) is configured to acquire height information and to determine the actual soil tillage result based on the height information.

3. The tool system (100) according to claim 1 or 2,
wherein the sensor system (120) comprises a laser sensor for determining the actual soil tillage result;
wherein the sensor system (120) comprises an optical sensor for determining the actual soil tillage result; and/or
wherein the sensor system (120) comprises a radar sensor for determining the actual soil tillage result.

4. The tool system (100) according to claim 3,
wherein the sensor system (120) is configured such that a two-dimensional or three-dimensional soil profile (400p) of the cultivated soil tillage region (101b) can be determined.

5. The tool system (100) according to claim 3,
wherein the radar sensor (440) is configured such that reflection properties and/or adsorption properties of the soil can be determined by means of radar radiation.

6. The tool system (100) according to any one of claims 1 to 5,
wherein the soil tillage result is a soil crumbling of the soil; and/or
wherein the soil tillage result is a mixing of organic matter into the soil.

7. The tool system (100) according to any one of claims 1 to 6,
wherein the soil tillage unit (110) further comprises at least one pulled tool (512) for cultivating the soil.

8. The tool system (100) according to any one of claims 1 to 7,
wherein the at least one trailing tool (612) is configured for depth guidance of the at least one rotatably mounted soil tillage tool (110) and/or for depth guidance of at least one pulled tool (512).

9. The tool system (100) according to any one of claims 1 to 8, further
comprising:
a generator module (800) for supplying the electric drive with electric energy, wherein the generator module (800) comprises a generator (810) for generating the electric energy, preferably for converting mechanical energy supplied to the generator module (800) into electric energy.

10. The tool system (100) according to any one of claims 1 to 9, further
comprising:
a further sensor system (920) which is configured to determine at least one soil condition of the soil (101) prior to cultivating the soil tillage region and/or outside the cultivated soil tillage region (101b).

11. The tool system (100) according to claim 10,
wherein the at least one soil condition of the soil (101) comprises or is one of the following: the plant mass on and/or within the soil, a soil surface structure, the soil moisture and/or the soil density.

12. The tool system (100) according to any one of claims 1 to 11,
wherein the control system (130) is further configured to change a number of revolutions and/or a torque of the trailing tool based on the determined actual soil tillage result (122) and the target soil tillage result (132) to reduce a deviation of the actual soil tillage result (122) from the target soil tillage result (132).

13. A carrier vehicle (800t) and a tool system (100) according to claim 9
coupled with the carrier vehicle,
wherein the carrier vehicle (800t) comprises a driven shaft (801) and is configured to supply mechanical energy to the generator module (800) by means of the driven shaft (801), wherein the generator module is preferably configured such that a part of the supplied mechanical energy is transferred to the tool system coupled with the carrier vehicle.

14. A control method for agricultural soil tillage by means of a soil tillage unit,
the control method comprising:
receiving actual work result data which represent an actual soil tillage result in a tillage region cultivated by means of the soil tillage unit, wherein the soil tillage unit comprises at least one rotatably mounted soil tillage tool and at least one trailing tool for cultivating the tillage region, wherein the at least one trailing tool is driven electrically for generating a propelling force;
receiving target work result data which represent a target soil tillage result within the tillage region of the soil tillage unit;
determining a deviation of the actual soil tillage result from a target soil tillage result; and
outputting control data, wherein the control data represent at least one operating parameter of the soil tillage unit for changing an operating condition of the soil tillage unit such that a deviation of the actual soil tillage result from the target soil tillage result is reduced;
wherein the at least one operating parameter represents a rotational speed of the rotatably mounted soil tillage tool of the soil tillage unit and a number of revolutions of the trailing tool of the soil tillage unit.

15. A storage medium comprising instructions which, when executed by at least one processor, carry out the method according to claim 14.

## Revendications

1. Système d'outil (100) pour le travail du sol agricole, le système d'outil présentant :
une unité de travail du sol (110) présentant au moins un outil de travail du sol (112) monté en rotation et un entraînement électrique (114) pour amener en rotation le au moins un outil de travail du sol (112) monté en rotation, dans lequel l'unité de travail du sol (110) est conçue pour modifier une vitesse de rotation (ω) du au moins un outil de travail du sol (112) monté en rotation au moyen de l'entraînement électrique (114) pour produire un résultat de travail du sol dépendant de la vitesse de rotation (ω) dans une zone de travail du sol (101b) travaillée au moyen de l'unité de travail du sol (110), dans lequel l'unité de travail du sol (110) présente en outre au moins un outil remorqué (612) pour travailler la zone de travail du sol (101b), dans lequel le au moins un outil remorqué (612) est entraîné électriquement pour produire une force de propulsion ;
un système de capteur (120), lequel est conçu pour déterminer un résultat de travail du sol réel (122) dans la zone de travail du sol (101b) travaillée au moyen de l'unité de travail du sol (110) ; et
un système de régulation (130), lequel est conçu pour modifier, sur la base du résultat de travail du sol réel (122) déterminé et d'un résultat de travail du sol de consigne (132), la vitesse de rotation (ω) du au moins un outil de travail du sol (112) monté en rotation pour réduire un écart entre le résultat de travail du sol réel (122) et le résultat de travail du sol de consigne (132).

2. Système d'outil (100) selon la revendication 1,
dans lequel le système de capteur (120) est conçu pour acquérir des informations de hauteur et pour déterminer sur la base des informations de hauteur le résultat de travail du sol réel.

3. Système d'outil (100) selon la revendication 1 ou 2,
dans lequel le système de capteur (120) présente un capteur laser pour déterminer le résultat de travail du sol réel ;
dans lequel le système de capteur (120) présente un capteur optique pour déterminer le résultat de travail du sol réel ; et/ou
dans lequel le système de capteur (120) présente un capteur radar pour déterminer le résultat de travail du sol réel.

4. Système d'outil (100) selon la revendication 3,
dans lequel le système de capteur (120) est conçu de telle sorte qu'un profil de sol bidimensionnel ou tridimensionnel (400p) de la zone de travail du sol (101b) travaillée peut être déterminé.

5. Système d'outil (100) selon la revendication 3,
dans lequel le capteur radar (440) est conçu de telle sorte que des propriétés de réflexion et/ou propriétés d'absorption du sol peuvent être déterminées au moyen d'un rayonnement radar.

6. Système d'outil (100) selon l'une quelconque des revendications 1 à 5,
dans lequel le résultat de travail du sol est un émiettage de sol du sol ; et/ou
dans lequel le résultat de travail du sol est une incorporation de matière organique dans le sol.

7. Système d'outil (100) selon l'une quelconque des revendications 1 à 6,
dans lequel l'unité de travail du sol (110) présente en outre au moins un outil tracté (512) pour le travail du sol.

8. Système d'outil (100) selon l'une quelconque des revendications 1 à 7,
dans lequel le au moins un outil remorqué (612) est conçu pour le guidage en profondeur du au moins un outil de travail du sol (110) monté en rotation et/ou pour le guidage en profondeur d'au moins un outil tracté (512).

9. Système d'outil (100) selon l'une quelconque des revendications 1 à 8, présentant en outre :
un module de générateur (800) pour alimenter l'entraînement électrique en énergie électrique, dans lequel le module de générateur (800) présente un générateur (810) pour produire l'énergie électrique, de préférence pour convertir l'énergie mécanique amenée par le module de générateur (800) en énergie électrique.

10. Système d'outil (100) selon l'une quelconque des revendications 1 à 9, présentant en outre :
un autre système de capteur (920), lequel est conçu pour déterminer au moins un état de sol du sol (101) avant le travail de la zone de travail du sol et/ou à l'extérieur de la zone de travail du sol (101b) travaillée.

11. Système d'outil (100) selon la revendication 10,
dans lequel le au moins un état de sol du sol (101) présente ou est un de ce qui suit : la matière végétale sur et/ou dans le sol, une structure de surface du sol, l'humidité du sol, et/ou la densité du sol.

12. Système d'outil (100) selon l'une quelconque des revendications 1 à 11,
dans lequel le système de régulation (130) est conçu en outre pour modifier, sur la base du résultat de travail du sol réel (122) déterminé et du résultat de travail du sol de consigne (132) une vitesse de rotation et/ou un couple de l'outil remorqué pour réduire un écart entre le résultat de travail du sol réel (122) et le résultat de travail du sol de consigne (132).

13. Véhicule de support (800t) et système d'outil (100) selon la revendication 9 accouplé au véhicule de support,
dans lequel le véhicule de support (800t) présente un arbre entraîné (801) et est conçu de manière à amener de l'énergie mécanique au module de générateur (800) au moyen de l'arbre entraîné (801), dans lequel le module de générateur est conçu de préférence de telle sorte qu'une partie de l'énergie mécanique amenée est transmise au système d'outil accouplé au véhicule de support.

14. Procédé de régulation pour le travail du sol agricole au moyen d'une unité de travail du sol, le procédé de régulation présentant :
la réception de données de résultat de travail réel, lesquelles représentent un résultat de travail du sol réel dans une zone de travail travaillée au moyen de l'unité de travail du sol, dans lequel l'unité de travail du sol présente au moins un outil de travail du sol monté en rotation et au moins un outil remorqué pour travailler la zone de travail, dans lequel le au moins un outil remorqué est entraîné électriquement pour produire une force de propulsion ;
la réception de données de résultat de travail de consigne, lesquelles représentent un résultat de travail du sol de consigne dans la zone de travail de l'unité de travail du sol ;
la détermination d'un écart entre le résultat de travail du sol réel et un résultat de travail du sol de consigne ; et
l'émission de données de commande, dans lequel les données de commande représentent au moins un paramètre de fonctionnement de l'unité de travail du sol pour modifier un état de fonctionnement de l'unité de travail du sol, de telle sorte qu'un écart entre le résultat de travail du sol réel et le résultat de travail du sol de consigne est réduit ;
dans lequel le au moins un paramètre de fonctionnement représente une vitesse de rotation de l'outil de travail du sol monté en rotation de l'unité de travail du sol et une vitesse de rotation de l'outil remorqué de l'unité de travail du sol.

15. Support d'enregistrement présentant des instructions, lesquelles, exécutées par au moins un processeur, mettent en œuvre le procédé selon la revendication 14.
